# DEMANDE DE BREVET EUROPEEN

(11) **EP 1 172 961 A1**
(43) Date de publication de la demande: **16.01.2002**
(21) Numéro de dépôt: 01202369.3
(22) Date de dépôt: 19.06.2001
(51) Int. Cl.: H04L 1/20, H04L 1/00

(54) **Système de communication, récepteur, méthode d'estimation d'erreurs dues au canal**

(30) Priorité: 27.06.2000 FR 0008267
(71) Demandeur: Koninklijke Philips Electronics N.V., 5621 BA Eindhoven (NL)
(72) Inventeur: Bonifas, Jean-Luc, Société Civile S.P.I.D., 75008 Paris (FR)
(74) Mandataire: Chaffraix, Jean

(57) **Abrégé**

L'invention concerne un récepteur prenant part dans un système de communication recevant des trames de données via un canal de communication sujet aux perturbations, le récepteur procédant à une estimation des taux maximum d'erreurs et minimum dues au canal de communication. Le récepteur procède dans un premier temps à la vérification de la validité des trames de données reçues, pour détecter et identifier les trames de données reçues erronées et les trames de données reçues non-erronées. Ensuite, le récepteur procède à la correction des erreurs des trames de données reçues erronées corrigeables, pour générer des trames de données corrigées. En effectuant une comparaison bit à bit des trames de données erronées 302 et des trames de données corrigées correspondantes 303, les bits erronés sont détectés, totalisés puis moyennés par rapport au nombre total de bits nb_total_bits reçus par le récepteur, pour obtenir un taux minimum d'erreurs de transmission. Cette invention permet aussi d'estimer une valeur maximale du taux d'erreurs des données reçues en totalisant le nombre de bits contenus dans les trames de données 301 ne pouvant être corrigées.

Application : Estimation de taux d'erreurs sur un canal de communication

## Description

L'invention concerne un récepteur pour recevoir et traiter des trames de données transmises sur un canal de transmission, comprenant :
- des moyens de vérification de la validité des trames de données reçues, pour détecter et identifier dans les trames de données reçues, des trames de données non-erronées et des trames de données erronées, ces dernières étant de nature corrigeable ou non-corrigeable,
- des moyens de correction d'erreurs appliqués aux trames de données reçues erronées corrigeables, pour générer des trames de données corrigées.

Elle concerne également un système de communication pour transmettre des trames de données entre un émetteur et un récepteur du type précédemment décrit, via un canal de communication.

Elle a de nombreuses applications dans les systèmes de communication de parole et de données multimédias en général, comme c'est notamment le cas dans les applications de type vidéophonie sur réseaux mobiles ou filaires.

Le brevet américain numéro 5,511,079 décrit un système pour contrôler la protection aux erreurs des données transmises entre une station émettrice et une station réceptrice, via une voie de transmission bidirectionnelle par satellite. La station émettrice prévoit d'adapter la protection aux erreurs des données transmises suivant la valeur de signaux représentant les conditions de propagation et d'atténuation des signaux envoyés. Pour cela, une méthode est mise en oeuvre pour permettre d'estimer indirectement le taux d'erreurs des données reçues au niveau du récepteur. Les moyens de protection aux erreurs mis en oeuvre, du type FEC (de l'anglais Forward Error Correction, appellation incluant l'ensemble des codes correcteurs tels que les codes convolutifs ou en blocs), sont ainsi adaptés aux dites conditions de propagation et d'atténuation de sorte que le taux d'erreurs des données reçues par le récepteur ne dépasse pas une valeur prédéfinie. La station émettrice estime l'atténuation des signaux envoyés à la station réceptrice à partir du rapport signal sur bruit d'un premier signal de retour provenant du récepteur, et du rapport signal sur bruit d'un second signal de retour reçu dans des conditions optimales de transmission.

La méthode d'estimation du taux d'erreurs des données transmises au récepteur mise en oeuvre dans le document de l'art antérieur présente un certain nombre d'inconvénients.

Tout d'abord, l'estimation du taux d'erreurs étant basée sur un calcul relatif utilisant une valeur de référence d'un rapport signal sur bruit mesuré dans des conditions optimales de transmission, il subsiste une incertitude quant aux taux d'erreurs estimés puisqu'il est difficile de caractériser avec fidélité une "condition optimale" de transmission.

D'autre part, l'estimation du taux d'erreurs via des mesures de rapports signal sur bruit n'est pas fiable dans la mesure où l'atténuation d'un signal porteur de données n'est pas toujours significative de la présence d'erreurs ni de pertes de données. Cela peut conduire à une sur-estimation du taux d'erreurs et donc à une sur-protection des données transmises, entraînant ainsi l'encombrement ou la saturation du canal de transmission.

Enfin, le calcul de rapports signal sur bruit nécessitant une puissance et des moyens de calcul importants, cette méthode d'estimation du taux d'erreurs est non seulement coûteuse mais implique aussi un encombrement matériel important qui exclut son utilisation dans des applications ou des matériels portables.

L'invention a pour but de remédier dans une large mesure à ces inconvénients en proposant un système de communication, un récepteur, ainsi qu'une méthode, afin d'estimer les erreurs dues au canal de communication, d'une façon plus fiable et moins coûteuse que celle décrite dans le document de l'art antérieur.
A cet effet, la présente invention est remarquable en ce que le récepteur comporte :
- des moyens de comparaison des trames de données reçues erronées aux trames de données corrigées correspondantes, pour estimer un taux minimum d'erreurs de transmission des trames de données reçues,
- des moyens d'analyse des trames de données reçues erronées non corrigeables, pour estimer un taux maximum d'erreurs de transmission des trames de données reçues,
- des moyens de transmission des informations relatives aux dits taux minimum et maximum d'erreurs à un appareil distant.

L'invention tire profit de la protection aux erreurs du type FEC appliquée aux données ou aux trames de données transmises entre un émetteur et un récepteur. Le récepteur procède dans un premier temps à la vérification de la validité des trames de données reçues, pour détecter et identifier dans les trames de données reçues, des trames de données non-erronées et des trames de données erronées. Ensuite, le récepteur procède à la correction des erreurs des trames de données reçues erronées corrigeables, c'est-à-dire sur les trames de données ne contenant pas plus d'erreurs que ne peut en corriger le dispositif de correction FEC, pour générer des trames de données corrigées. En effectuant une comparaison bit à bit des trames de données erronées et des trames de données corrigées correspondantes, les bits erronés sont détectés, totalisés puis moyennés par rapport au nombre total de bits reçus par le récepteur, pour obtenir un taux minimum d'erreurs de transmission. Cette comparaison est seulement effectuée sur les trames de données erronées pour lesquelles une correction est possible. Le taux d'erreurs calculé par cette comparaison minore donc le taux d'erreurs réel des données reçues, c'est pour cette raison que l'on parle de taux minimum d'erreurs. Cette comparaison faisant principalement appel à un opérateur binaire du type "OU exclusif' couramment disponible dans les gammes de circuiteries logiques intégrées, les moyens de calcul nécessaires pour effectuer cette comparaison bit à bit sont donc fortement réduits.

Cette invention permet aussi d'estimer une valeur maximale du taux d'erreurs des données reçues, c'est-à-dire estimer une valeur majorant le taux d'erreurs réel des données reçues au récepteur. Pour cela, pour chaque trame détectée de données non corrigeables, c'est-à-dire sur les trames de données contenant plus d'erreurs que ne peut en corriger le dispositif de correction FEC, les bits définissant ladite trame sont additionnés au nombre de bits corrigés appartenant aux autres trames de données reçues. Une moyenne par rapport au nombre total de bits reçus par le récepteur est alors effectuée pour estimer un taux maximum d'erreurs des données reçues au récepteur.

De cette façon, il est possible d'estimer un encadrement du taux d'erreurs réel des données reçues au récepteur en mettant en oeuvre des moyens limités et peu onéreux.

L'invention concerne enfin un système de communication de type radiotéléphonie entre un émetteur et un récepteur dont le fonctionnement pourra bénéficier des possibilités d'estimation des taux minimum et maximum d'erreurs ci-dessus décrites. L'invention prévoit en effet des moyens de transmission des informations relatives aux dits taux minimum et maximum d'erreurs du récepteur au dit émetteur pour que ce dernier puisse adapter la protection des données envoyées au récepteur. L'émetteur règle ainsi le niveau de redondance des données envoyées de façon adaptée au taux d'erreurs dues au canal de transmission. Le compromis entre l'occupation de la bande passante du canal de transmission et le taux d'erreurs des données reçues au récepteur est donc optimal.

Ces aspects de l'invention ainsi que d'autres aspects plus détaillés apparaîtront plus clairement grâce à la description suivante de plusieurs modes de réalisation de l'invention, donnés à titres d'exemples non limitatifs et en regard des dessins annexés dans lesquels :
La figure 1 est un schéma du principe d'encodage des trames de données envoyées par un émetteur et reçues par un récepteur,
La figure 2 est un schéma fonctionnel décrivant le séquencement des différentes opérations contribuant à l'invention,
La figure 3 est un schéma fonctionnel décrivant le séquencement des différentes opérations selon l'invention,
La figure 4 est un schéma décrivant un système de communication comprenant un récepteur selon l'invention.

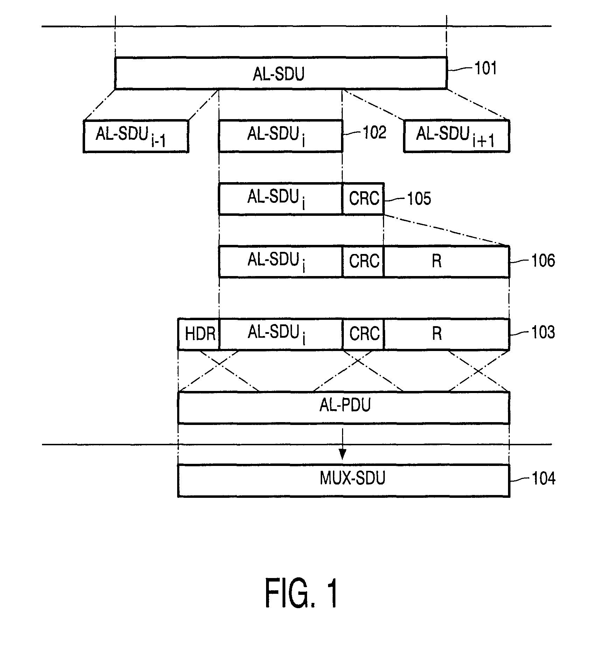

La figure 1 décrit schématiquement le principe d'encodage des trames de données envoyées par un émetteur et reçues par un récepteur du type précédemment décrit. Les explications sont données relativement à la norme ITU-H.324/M, mais il apparaîtra pour l'homme du métier que l'invention peut également être utilisée avec d'autres normes de communication, telles que celles de la série H.32i.
La norme ITU-H.324/M, dédiée à la communication entre un émetteur et un récepteur mobile, fait notamment appel à la norme H.223 qui assure la gestion des différentes tâches de multiplexage via ses quatre annexes A-B-C-D. Ces annexes permettent la transmission de données multimédias, telles que des données du type images vidéos et/ou son, sur des canaux de transmission pouvant faire l'objet de perturbations, ce qui peut alors être source d'apparition d'erreurs dans lesdites données transmises au récepteur. Les annexes C et D permettent d'accroître la robustesse aux erreurs en appliquant aux données à transmettre un algorithme de type FEC (de l'anglais Forward Error Correction). Pour cela, les données à transmettre, définies par AL-SDU (de l'anglais Adaptation Layer Service Data Unit) et repérées par 101, sont tout d'abord segmentées en trames de données élémentaires de taille variable AL-SDUᵢ repérées par 102. Des données CRC de vérification de redondance cyclique (de l'anglais Cyclic Redundancy Check) sont ensuite associées à chaque trames de données AL-SDUᵢ, l'ensemble 105 de données ainsi formé étant alors encodé selon un encodage de type RCPC (de l'anglais Rate Compatible Punctured Convolutional) ou de type Reed-Solomon. Dans une étape suivante, et dans le but de reconstruire d'éventuelles données perdues lors de la transmission, des données R dites de redondance sont concaténées aux données précédemment encodées. L'addition d'un entête HDR (de l'anglais Header) aux données 106 ainsi constituées permet d'obtenir des trames de données de type AL-PDU (de l'anglais Adaptation Layer Protocol Data Unit) référencées par 103, et destinées à être transmises au récepteur après une opération de multiplexage pour délivrer des trames de données de type MUX-SDU référencées par 104.

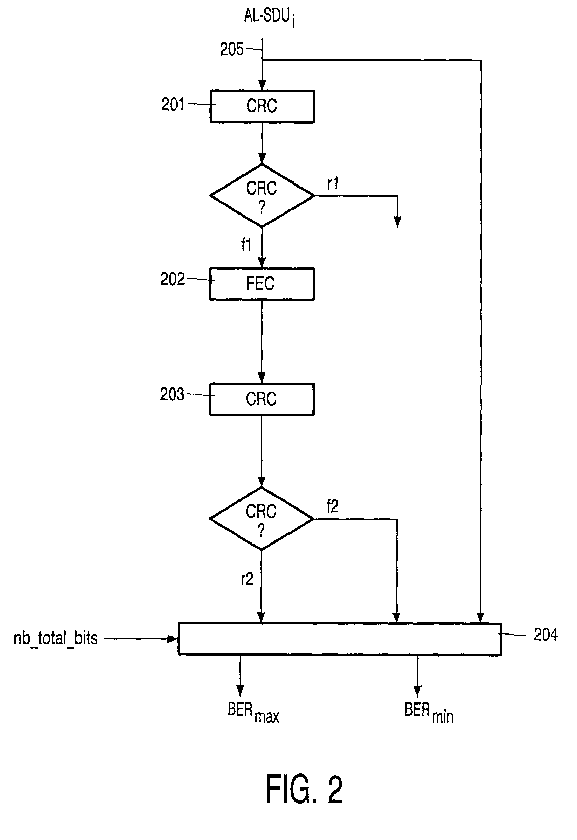

La figure 2 est un schéma fonctionnel décrivant le séquencement des différentes opérations contribuant à l'invention.

Les données CRC, propres aux données initiales transmises par l'émetteur, permettent de vérifier la validité des trames de données AL-SDUᵢ reçues au niveau du récepteur après démultiplexage des trames de données MUX-SDU : les données CRC utilisées constituent une auto-validation des trames de données reçues. Ainsi, si la vérification CRC référencée par 201 sur les données AL-SDUᵢ entrantes référencées par 205 conduit à un résultat positif, cf. flèche r1, il est possible de décoder les données transmises sans prendre de précaution particulière puisque aucune erreur n'est venue affecter la trame de données correspondante au cours de la transmission. Dans le contexte de l'invention visant à estimer les taux minimum et maximum d'erreurs sur les données transmises, ce type de trame de données n'est pris en considération que pour incrémenter le nombre total de bits reçus par le récepteur. Seules sont prises en considération pour le cumul des erreurs, les trames de données où au moins une erreur a été détectée par l'opération 201. Au contraire, si la vérification 201 conduit à un résultat négatif, cf. flèche f1, cela signifie qu'il y a eu altération et introduction d'erreurs dans les données envoyées par l'émetteur sur le canal de transmission. La trame de données AL-SDUᵢ correspondante est alors traitée en 202 en vue d'être corrigée. A cet effet, les différentes étapes de l'algorithme FEC sont mises en oeuvre en utilisant les données de redondance R conjointement envoyées afin de corriger les erreurs détectées. Après cette correction 202, une opération de vérification appliquée à la trame ainsi corrigée 203 est nécessaire pour juger le résultat de cette correction. Cette vérification est effectuée en appliquant le code d'auto-vérification CRC à la trame de données corrigée. Deux cas de figure se présentent alors :
- la vérification 203 conduit à un résultat faux, cf. flèche f2. Cela est par exemple le cas s'il y a eu introduction massive d'erreurs ou de pertes importantes de données lors de la transmission sur le canal de communication. Dans ce cas, la trame de données AL-SDUᵢ correspondante est considérée comme définitivement non-corrigeable et tous les bits la constituant sont considérés comme des erreurs,
- la vérification 203 conduit à un bon résultat, cf. flèche r2. Il a donc été possible de reconstruire les trames de données initiales à partir des trames de données reçues erronées en utilisant les données de redondance R.
   Le module 204 ayant pour fonction de déterminer les taux BERₘᵢₙ et BERₘₐₓ analyse ensuite trois types de signaux afin de quantifier les erreurs de transmission :
- les trames de données où tous les bits sont considérés comme des erreurs : ces trames contribuent au calcul d'un taux maximum d'erreurs BERₘₐₓ des données reçues au niveau du récepteur,
- les trames de données comportant au moins une erreur et les trames de données corrigées correspondantes : ces trames contribuent au calcul d'un taux minimum d'erreurs BERₘᵢₙ des données reçues au niveau du récepteur.
Afin d'obtenir que les taux minimum et maximum d'erreurs correspondent à des valeurs moyennes, les cumuls d'erreurs précédemment décrits sont moyennés par rapport au nombre total de bits nb_total_bits reçus au niveau du récepteur, ce nombre total nb_total_bits étant non seulement obtenu par addition des bits appartenant aux trames non-erronées mais aussi des bits appartenant aux trames erronées.

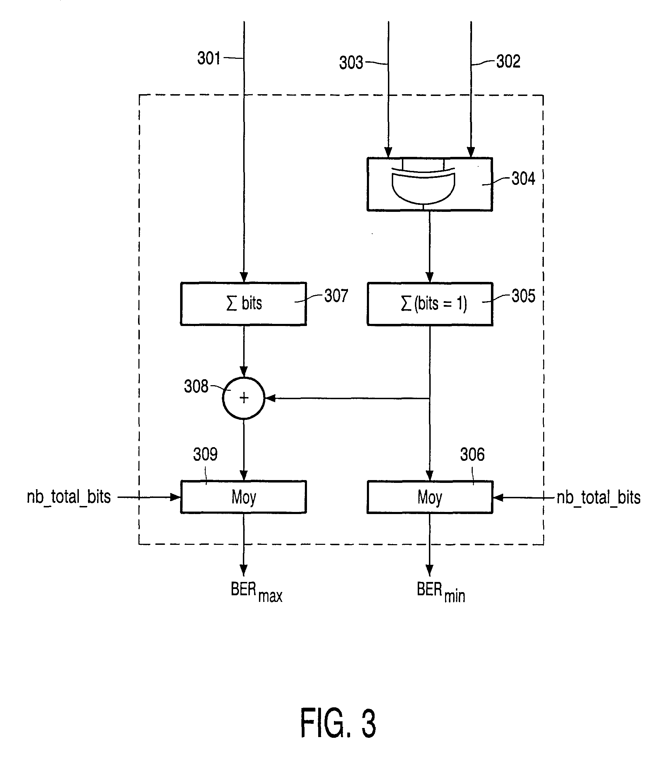

La figure 3 décrit de façon schématique les différents traitements nécessaires à l'estimation des dits taux d'erreurs BERₘᵢₙ et BERₘₐₓ. Dans le contexte d'une communication entre un émetteur et un récepteur, ces différentes opérations sont effectuées au niveau du récepteur en analysant les trames de données reçues erronées non-corrigeables 301, les trames de données reçues erronées 302 et les trames de données corrigées correspondantes 303.

Afin d'estimer un taux minimum d'erreurs des données reçues, une comparaison binaire 304 est effectuée entre les trames de données reçues erronées 302 et les trames de données corrigées correspondantes 303. Cette comparaison a pour objectif de déterminer le nombre de bits erronés contenus dans chacune des trames de données 303. Ces trames de données ayant été corrigées, il est dès lors possible d'effectuer une opération binaire du type "OU exclusif' afin d'obtenir un mot binaire dans lequel les bits qui ont été corrigés sont à un niveau "haut". Le nombre d'erreurs reçues dans chaque trame de données 302 est alors directement obtenu par le sommateur 305 des dits bits de niveau "haut". Dans un dernier temps, une moyenne entre le nombre d'erreurs ainsi cumulées et le nombre total de bits reçus nb_total_bits au niveau du récepteur est effectuée en 306 pour délivrer la valeur d'un taux minimum d'erreurs BERₘᵢₙ des données reçues, ce nombre total nb_total_bits étant non seulement obtenu par addition des bits appartenant aux trames non-erronées mais aussi des bits appartenant aux trames erronées.

Afin d'estimer un taux maximum d'erreurs des données reçues, une analyse des trames de données erronées non-corrigeables 301 est effectuée. Par exemple, de part le trop grand nombre d'erreurs contenus dans ces trames, ces dernières ne peuvent parfois être corrigées. Dans ce cas, tous les bits de ces trames sont considérés comme des erreurs. L'opération 307 totalise ainsi pour chaque trame de données 301 le nombre de bits contenus. Une opération d'addition 308 entre le nombre de bits erronés contenus dans les trames de données 302 et le nombre de bits erronés des trames 301 permet d'obtenir un majorant du nombre d'erreurs réel des données transmises sur le canal de communication. Dans un dernier temps, une moyenne entre le nombre d'erreurs ainsi cumulées et le nombre total de bits reçus nb_total_bits au niveau du récepteur est effectuée en 309 pour délivrer la valeur d'un taux maximum d'erreurs BERₘₐₓ des données reçues, ce nombre total nb_total_bits étant non seulement obtenu par addition des bits appartenant aux trames non-erronées mais aussi des bits appartenant aux trames erronées.

Il est ainsi obtenu un encadrement du taux d'erreurs réel dû au canal de transmission, cet encadrement étant d'autant plus fin qu'il y a peu de trames de données non corrigeables puisque dans ce cas il est possible de détecter et corriger des erreurs isolées dans des trames de données erronées. Il peut cependant arriver que le CRC échoue dans sa détection alors que la trame comprend quelques données erronées. Dans ce cas, tous les bits de la trame correspondante sont considérés comme erronés. Cependant, la probabilité de non-détection étant d'autant plus faible que la longueur du code CRC est grande, il apparaît en pratique qu'avec un code CRC d'une longueur de 16 bits, la plupart des bits erronés peuvent être détectés isolément. La présente invention conduit à des résultats remarquables tout en restant économique.

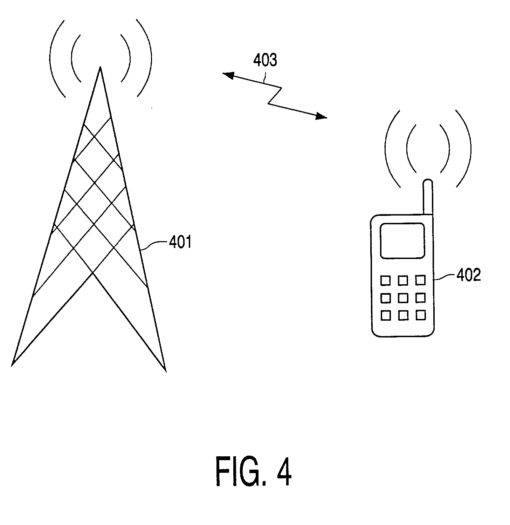

La figure 4 est un schéma décrivant un système de communication comprenant un émetteur 401 et un récepteur 402 selon l'invention. L'émetteur, ici correspondant à une station de base, envoie des trames de données encodées selon le principe décrit à la figure 1, via un canal de communication 403 pouvant faire l'objet de perturbations et introduisant de ce fait des erreurs dans les données envoyées par l'émetteur. A la réception, le récepteur détecte les trames de données erronées afin de les corriger au moyen des données de redondance également contenues dans les dites trames. Parallèlement, selon l'invention, une estimation du taux minimum d'erreurs BERₘᵢₙ et du taux maximum d'erreurs BERₘₐₓ est effectuée afin de déterminer un encadrement du taux d'erreurs réel sur le canal de communication. Une fois déterminées, ces informations BERₘᵢₙ et BERₘₐₓ sont directement ou indirectement envoyées vers l'émetteur afin que celui-ci adapte le niveau de redondance des données envoyées vers le récepteur afin de prévenir les erreurs dues au canal. Pour cela, deux solution peuvent être envisagées :
- soit les valeurs BERₘᵢₙ et BERₘₐₓ sont directement envoyées vers l'émetteur via un protocole "propriétaire",
- soit les valeurs BERₘᵢₙ et BERₘₐₓ sont envoyées indirectement via un protocole système du type H.245 ayant en charge les échanges de messages entre différents terminaux. Dans ce cas, les valeurs BERₘᵢₙ et BERₘₐₓ sont dans un premier temps converties en taux de redondance minimum et taux de redondance maximum respectivement, lesquels taux de redondance étant finalement envoyés via un protocole du type H.245 à l'émetteur. Une fois reçus au niveau de l'émetteur, ces taux de redondance minimum et maximum permettent de définir un niveau de redondance à appliquer aux trames de données envoyées au récepteur, par exemple en optant pour une valeur intermédiaire des dits taux minimum et maximum.
Dans ce type de communication, les taux d'erreurs BERₘᵢₙ et BERₘₐₓ peuvent être estimés au début de chaque communication, ou alors périodiquement afin que l'émetteur dispose avant l'envoi des données, des taux d'erreurs les plus significatifs.

Ainsi ont été décrits et illustrés un système de communication, un récepteur, ainsi que les différentes étapes permettant d'estimer des taux minimum et maximum d'erreurs dues au canal de communication. Bien entendu, de nombreuses variantes pourront être apportées aux modes de réalisation décrits sans sortir du cadre de l'invention, notamment il pourra être envisagé d'utiliser seulement lesdits taux minimum et maximum d'erreurs au niveau du récepteur.

## Revendications

1. Récepteur pour recevoir et traiter des trames de données transmises sur un canal de transmission, comprenant :
a) des moyens de vérification de la validité des trames de données reçues, pour détecter et identifier dans les trames de données reçues, des trames de données non-erronées et des trames de données erronées, ces dernières étant de nature corrigeable ou non-corrigeable,
b) des moyens de correction d'erreurs appliqués aux trames de données reçues erronées corrigeables, pour générer des trames de données corrigées,
**caractérisé en ce qu'**il comporte :
c) des moyens de comparaison des trames de données reçues erronées aux trames de données corrigées correspondantes, pour estimer un taux minimum d'erreurs de transmission des trames de données reçues,
d) des moyens d'analyse des trames de données reçues erronées non corrigeables, pour estimer un taux maximum d'erreurs de transmission des trames de données reçues,
e) des moyens de transmission des informations relatives aux dits taux minimum et maximum d'erreurs à un appareil distant.

2. Récepteur selon la revendication 1 **caractérisé en ce que** les moyens de comparaison comprennent un opérateur binaire bit à bit du type "OU exclusif' appliqué entre les trames de données reçues erronées et les trames de données corrigées correspondantes, générant un mot de sortie renseignant sur le nombre de bits corrigés contenus dans lesdites trames de données corrigées.

3. Récepteur selon la revendication 1 **caractérisé en ce que** les moyens d'analyse des trames de données reçues erronées non corrigeables comprennent :
a) un dispositif sommateur renseignant sur le nombre de bits contenus dans lesdites trames de données non corrigeables,
b) un dispositif d'addition du nombre de bits corrigés contenus dans les trames de données corrigées, au dit nombre de bits contenus dans les trames de données non corrigeables.

4. Système de communication pour transmettre des trames de données entre un émetteur et un récepteur via un canal de communication, ledit émetteur comprenant des moyens de protection des trames transmises, et ledit récepteur comprenant :
a) des moyens de vérification de la validité des trames de données reçues, pour détecter et identifier les trames de données reçues erronées et les trames de données reçues non-erronées,
b) des moyens de correction d'erreurs appliqués aux trames de données reçues erronées corrigeables, pour générer des trames de données corrigées,
**caractérisé en ce que** le récepteur comporte :
c) des moyens de comparaison des trames de données reçues erronées aux trames de données corrigées correspondantes, pour estimer un taux minimum d'erreurs de transmission des trames de données reçues,
d) des moyens d'analyse des trames de données reçues erronées non corrigeables, pour estimer un taux maximum d'erreurs de transmission des trames de données reçues,
e) des moyens de transmission des dits taux minimum et maximum d'erreurs au dit émetteur.

5. Système de communication selon la revendication 4 **caractérisé en ce que** l'émetteur comporte des moyens d'adaptation de la protection des trames transmises au récepteur, aux dits taux minimum et maximum d'erreurs.

6. Equipement téléphonique comportant un récepteur selon la revendication 1.

7. Méthode d'estimation d'erreurs au niveau d'un récepteur, pour estimer les erreurs sur un canal de transmission, comportant :
a) une étape de vérification de la validité des trames de données reçues, pour détecter et identifier les trames de données reçues erronées et les trames de données reçues non-erronées,
b) une étape de correction d'erreurs appliquée aux trames de données reçues erronées corrigeables, pour générer des trames de données corrigées,
**caractérisée en ce qu'**elle comprend les étapes suivantes :
c) une étape de comparaison des trames de données reçues erronées aux trames de données corrigées correspondantes, pour estimer un taux minimum d'erreurs de transmission des trames de données reçues,
d) une étape d'analyse des trames de données reçues erronées non corrigeables, pour estimer un taux maximum d'erreurs de transmission des trames de données reçues.

8. Méthode selon la revendication 7 **caractérisée en ce que** l'étape de comparaison comprend une opération binaire bit à bit du type "OU exclusif' appliquée entre les trames de données reçues erronées et les trames de données corrigées correspondantes, pour générer un mot de sortie renseignant sur le nombre de bits corrigés contenus dans lesdites trames de données corrigées.

9. Méthode selon la revendication 7 **caractérisée en ce que** l'étape d'analyse des trames de données reçues erronées non corrigeables comprend :
a) une sous-étape de sommation renseignant sur le nombre de bits contenus dans lesdites trames de données non corrigeables,
b) une sous-étape d'addition du nombre de bits corrigés contenus dans les trames de données corrigées, au dit nombre de bits contenus dans les trames de données non corrigeables.

10. Méthode de protection aux erreurs des trames de données transmises entre un émetteur et un récepteur via un canal de communication, ledit émetteur comprenant une étape de protection des trames transmises, et ledit récepteur comprenant :
a) une étape de vérification de la validité des trames de données reçues, pour détecter et identifier les trames de données reçues erronées et les trames de données reçues non-erronées,
b) une étape de correction d'erreurs appliquées aux trames de données reçues erronées corrigeables, pour générer des trames de données corrigées,
**caractérisée en ce que** :
c) le récepteur comporte une étape de comparaison des trames de données reçues erronées aux trames de données corrigées correspondantes, pour estimer un taux minimum d'erreurs de transmission des trames de données reçues,
d) le récepteur comporte une étape d'analyse des trames de données reçues erronées non corrigeables, pour estimer un taux maximum d'erreurs de transmission des trames de données reçues,
e) le récepteur comporte une étape de transmission des dits taux minimum et maximum d'erreurs au dit émetteur,
f) l'émetteur comporte une étape d'adaptation de la protection des trames transmises au récepteur, aux dits taux minimum et maximum d'erreurs.
